# EUROPEAN PATENT APPLICATION

(11) **EP 4 455 763 A1**
(43) Date of publication of application: **30.10.2024**
(21) Application number: 22910844.4
(22) Date of filing: 05.12.2022
(51) Int. Cl.: G02B 27/01, B60K 35/00

(54) **IMAGE PROJECTION DEVICE**

(30) Priority: 24.12.2021 JP 2021210469
(71) Applicant: KOITO MANUFACTURING CO., LTD., Minato-ku, Tokyo, 108-8711 (JP)
(72) Inventor: HAMADA Yuri, Shizuoka-shi, Shizuoka 424-8764 (JP); SUGIYAMA Takuo, Shizuoka-shi, Shizuoka 424-8764 (JP)
(74) Representative: Cabinet Beau de Loménie
(86) International application number: PCT/JP2022/044687
(87) International publication number: WO 2023/120130

(57) **Abstract**

A HUD 10 is configured to be able to display a plurality of virtual images at different distances. The HUD 10 includes an image generation unit 12 and a shielding member 14. The image generation unit 12 generates a first image for forming a first virtual image and a second image for forming a second virtual image to be displayed nearer than the first virtual image. The shielding member 14 can reduce an amount of external light incident on the image generation unit 12. The shielding member 14 is movable between a position through which first light constituting the first image emitted from the image generation unit 12 passes and a position through which the first light does not pass.

## Description

### TECHNICAL FIELD

The present disclosure relates to an image irradiation device.

### BACKGROUND ART

Patent Literature 1 discloses a head-up display (HUD) that reflects light constituting an image formed by an image generation unit on a windshield and superimposes the image as a virtual image on a real space ahead of a vehicle.

Additionally, in Patent Literature 1, in order to suppress occurrence of heat damage due to external light such as sunlight incident on the image generation unit, an optical filter is provided on an optical path of the light constituting the image emitted from the image generation unit.

### CITATION LIST

### PATENT LITERATURE

Patent Literature 1: JP2020-52070A

### SUMMARY OF INVENTION

### TECHNICAL PROBLEM

In Patent Literature 1, an amount of external light reaching the image generation unit can be reduced by the optical filter. However, a quality of the virtual image deteriorates because an amount of light constituting the image emitted from the image generation unit is also reduced. Therefore, there is room for improvement in suppressing the occurrence of heat damage due to the external light.

The present disclosure is to suppress occurrence of heat damage due to external light without deteriorating a quality of a virtual image.

### SOLUTION TO PROBLEM

An image irradiation device according to an aspect of the present disclosure is an image irradiation device for a vehicle configured to be able to display a plurality of virtual images at different distances, the image irradiation device including:
an image generation unit configured to generate a first image for forming a first virtual image and a second image for forming a second virtual image to be displayed nearer than the first virtual image; and
an optical member configured to be able to reduce an amount of external light incident on the image generation unit and to be movable between a position through which first light constituting the first image emitted from the image generation unit passes and a position through which the first light does not pass.

### ADVANTAGEOUS EFFECTS OF INVENTION

According to the present disclosure, it is possible to suppress occurrence of heat damage due to external light without deteriorating a quality of a virtual image.

### BRIEF DESCRIPTION OF DRAWINGS

FIG. 1 is a schematic diagram of a head-up display (HUD) according to an embodiment of the present disclosure as viewed from a side of a vehicle.
FIG. 2 is a plan view showing a configuration example of an image generation unit and a shielding member.
FIG. 3 is a side view showing the configuration example of the image generation unit and the shielding member.
FIG. 4 is a flowchart showing a flow of control of the shielding member by a controller.
FIG. 5 is a plan view showing the shielding member arranged at a first position.
FIG. 6 is a plan view showing the shielding member arranged at a second position.
FIG. 7 is a schematic view for illustrating an optical path when sunlight is incident on the HUD.
FIG. 8 is a plan view showing another configuration of the shielding member.
FIG. 9 is a side view showing another configuration of the shielding member.
FIG. 10 is a plan view showing another configuration of the shielding member.
FIG. 11 is a side view showing the shielding member arranged at the first position in FIG. 10.
FIG. 12 is a side view showing the shielding member arranged at the second position in FIG. 10.
FIG. 13 is a flowchart showing another flow of control of the shielding member by the controller.
FIG. 14 is a flowchart showing another flow of control on the shielding member by the controller.

### DESCRIPTION OF EMBODIMENTS

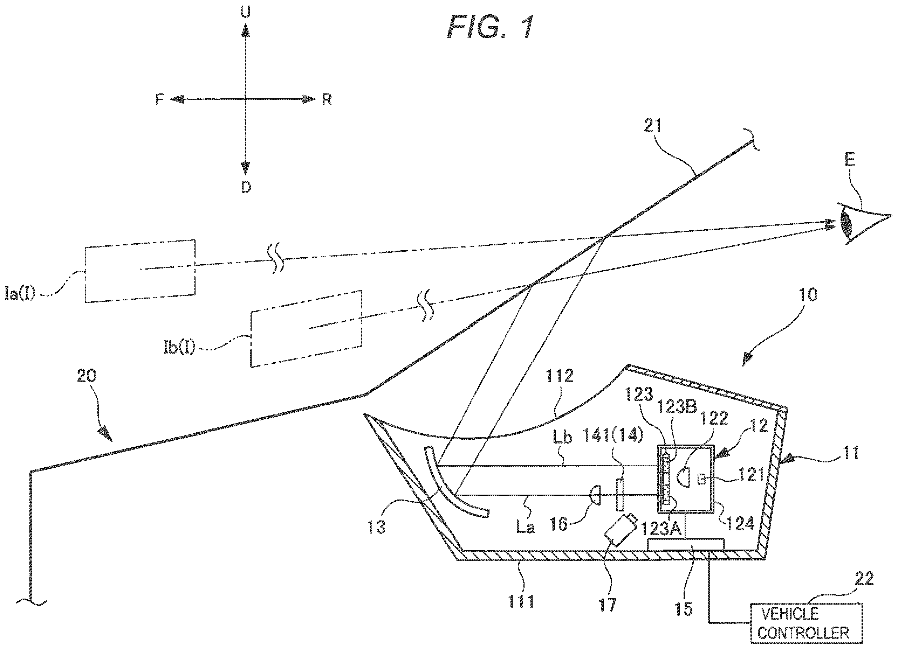

Hereinafter, embodiments of the present disclosure will be described with reference to the drawings. In the drawings, an arrow U indicates an up direction in the shown structure. An arrow D indicates a down direction in the shown structure. An arrow F indicates a front direction in the shown structure. An arrow B indicates a back direction in the shown structure. An arrow R indicates a right direction in the shown structure. An arrow L indicates a left direction in the shown structure. These directions are relative directions set with respect to a HUD 10 shown in FIG. 1.

As shown in FIG. 1, the HUD 10 is installed in a vehicle interior of a vehicle 20. For example, the HUD 10 is arranged in a dashboard of the vehicle 20. The HUD 10 functions as a visual interface between the vehicle 20 and an occupant of the vehicle 20. Specifically, the HUD 10 is configured to display predetermined information as a virtual image toward the occupant of the vehicle 20 so that the information is superimposed with a real space outside the vehicle 20 (e.g., a surrounding environment ahead of the vehicle 20). The predetermined information is displayed as a still image or moving image (video). The HUD 10 is an example of the image irradiation device.

The HUD 10 includes a HUD main body part 11, an image generation unit (PGU: Picture Generation Unit) 12, a concave mirror 13, a shielding member 14, and a controller 15. The HUD main body part 11 includes a housing 111 and an emission window 112. The image generation unit 12, the concave mirror 13, the shielding member 14, and the controller 15 are arranged inside the housing 111. The emission window 112 is configured by a transparent plate that transmits visible light.

The image generation unit 12 is configured to generate a predetermined image for forming a virtual image and to emit light constituting the image. The light emitted from the image generation unit 12 is, for example, visible light. The image generation unit 12 includes a light source 121, an optical component 122, a liquid crystal device 123, and a housing 124. The light source 121, the optical component 122, and the liquid crystal device 123 are arranged inside the housing 124.

The light source 121 is, for example, an LED light source or a laser light source. The LED light source is, for example, a white LED light source. The laser light source is, for example, an RGB laser light source configured to emit red laser light, green laser light, and blue laser light, respectively. The optical component 122 includes a prism, a lens, a diffusion plate, a magnifying glass, and the like. In the present example, a lens is used as the optical component 122. The optical component 122 transmits the light emitted from the light source 121 and emits the light toward the liquid crystal device 123.

The liquid crystal device 123 includes a liquid crystal phase, a polarizing film, and a drive circuit (each unit is not shown). By applying a voltage to the liquid crystal phase using the drive circuit, a state in which light transmits from the polarizing film and a state in which light cannot transmit from the polarizing film are switched. The liquid crystal phase and the polarizing film are divided into a plurality of pixels, and the light transmission and non-transmission states are switched for each pixel. A predetermined image is generated by allowing some pixels to transmit light and some other pixels not to transmit light. Note that instead of the liquid crystal device 123, a digital mirror device (DMD) or the like may be used as a display device.

The concave mirror 13 is arranged on an optical path of the light emitted from the image generation unit 12. In the present example, the concave mirror 13 is arranged in front of the image generation unit 12. The concave mirror 13 is configured to reflect the light emitted from the image generation unit 12 toward a windshield 21 (e.g., a front window of the vehicle 20). The concave mirror 13 has a reflective surface curved in a concave shape. The concave mirror 13 reflects the light emitted by the image generation unit 12 so that an image of the light emitted and formed by the image generation unit 12 is formed on the windshield 21 at a predetermined magnification. Note that the concave mirror 13 may be configured to be able to displace its position and direction by a drive mechanism (not shown). The concave mirror 13 is an example of the reflection unit.

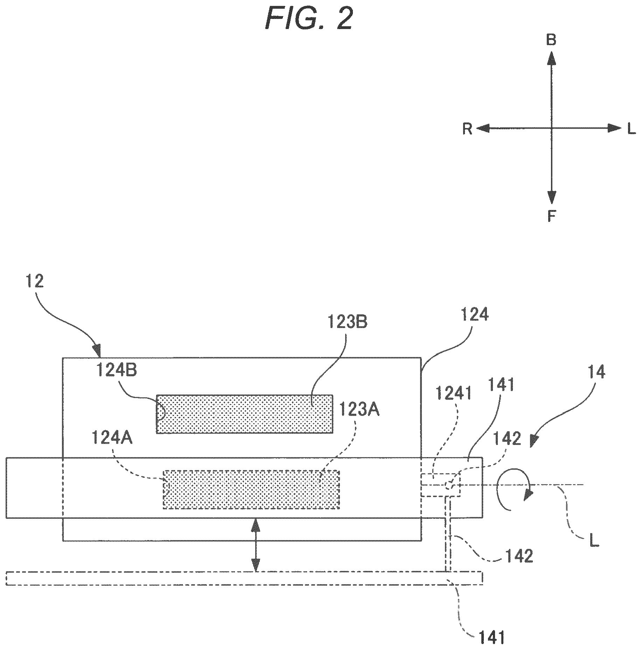

The shielding member 14 is configured to shield external light such as sunlight, which penetrates into the HUD main body part 11 from the outside of the vehicle 20 and is incident on the image generation unit 12. The shielding member 14 is attached to the image generation unit 12, for example (see FIG. 2). The shielding member 14 is configured to be movable between a position through which part of the light emitted from the image generation unit 12 passes and a position through which part of the light emitted from the image generation unit 12 does not pass. The shielding member 14 is an example of the optical member.

The controller 15 is configured to control an operation of each unit of the HUD 10. The controller 15 is connected to a vehicle controller 22, which controls an operation of each unit of the vehicle 20. The controller 15 generates a control signal for controlling an operation of the image generation unit 12 based on information related to traveling of the vehicle transmitted from the vehicle controller 22, for example, and transmits the control signal to the image generation unit 12. In addition, for example, the controller 15 generates a control signal for controlling an operation of the shielding member 14 based on the information related to traveling of the vehicle transmitted from the vehicle controller 22, and transmits the control signal to the shielding member 14.

As the information related to traveling of the vehicle, vehicle traveling state information related to a traveling state of the vehicle, surrounding environment information related to a surrounding environment of the vehicle 20, and the like may be exemplified. The vehicle traveling state information includes information about a speed of the vehicle 20 and information about a position of the vehicle 20. The surrounding environment information includes information about objects (pedestrians, other vehicles, signs, etc.) existing outside the vehicle 20. The surrounding environment information may include information about attributes of objects existing outside the vehicle 20 and information about distances or positions of objects with respect to the vehicle 20.

The light emitted from the image generation unit 12 is reflected by the concave mirror 13 and is emitted from the emission window 112 of the HUD main body part 11. The light emitted from the emission window 112 is irradiated onto the windshield 21. Part of the light irradiated onto the windshield 21 from the emission window 112 is reflected toward a viewpoint E of the occupant. As a result, the occupant recognizes the light emitted from the HUD 10 as a virtual image (predetermined image) formed at a predetermined distance ahead of the windshield 21. In this way, the image the generated by the image generation unit 12 is superimposed on a real space ahead of the vehicle 20 through the windshield 21, so that the occupant can visually recognize a virtual image object I formed by the predetermined image as if it is floating on the road located outside the vehicle 20.

The HUD 10 according to the present embodiment is configured to be able to display virtual images at two positions at different distances from the viewpoint E of the occupant. In the present example, the image generation unit 12 is configured to generate a first image for forming a first virtual image (virtual image object Ia) at a position (hereinafter, referred to as a distant location) where a distance from the viewpoint E of the occupant is longer and a second virtual image for forming a second virtual image (virtual image object lb) at a position (hereinafter, referred to as a nearby location) where a distance from the viewpoint E of the occupant is shorter than the first virtual image.

Specifically, as illustrated in FIGS. 1 and 2, the liquid crystal device 123 of the image generation unit 12 has a first region 123A for generating the first image and a second region 123B for generating the second image. On an upper surface of the housing 124 of the image generation unit 12, a first opening 124A corresponding to the first region 123A and a second opening 124B corresponding to the second region 123B are formed. First light constituting the first image generated by the first region 123A is emitted from the first opening 124A. Second light constituting the second image generated by the second region 123B is emitted from the second opening 124B.

A lens 16 is arranged at a position through which light emitted from the first region 123A of the liquid crystal device 123 and directed toward the concave mirror 13 passes. The lens 16 is configured to change a focal length of the light emitted from the first region 123A of the liquid crystal device 123.

For example, light La (an example of the first light) emitted from the first region 123A of the liquid crystal device 123 passes through the lens 16, and is reflected by the concave mirror 13 and emitted from the emission window 112 of the HUD main body part 11. The light emitted from the emission window 112 is irradiated onto the windshield 21 to form the virtual image object Ia. On the other hand, light Lb (an example of the second light) emitted from the second region 123B of the liquid crystal device 123 is reflected by the concave mirror 13 and emitted from the emission window 112 of the HUD main body part 11. The light emitted from the emission window 112 is irradiated onto the windshield 21 to form the virtual image object Ib.

Since the focal length of the light La emitted from the first region 123A of the liquid crystal device 123 changes as the light passes through the lens 16, an optical path length between the image generation unit 12 and the concave mirror 13 becomes longer as compared with an optical path length between the image generation unit 12 and the concave mirror 13. Thereby, the virtual image object Ia is formed ahead at a longer distance (for example, about 15 m) from the viewpoint E of the occupant as compared with the virtual image object Ib. On the other hand, the virtual object Ib is formed ahead, for example, at a short distance (for example, about 3 m) from the viewpoint E of the occupant. Note that a lens that does not change the focal length may also be used as the lens 16. As an optical component that changes the focal length of the light La emitted from the first region 123A of the liquid crystal device 123, a mirror or the like may be arranged in addition to or instead of the lens 16.

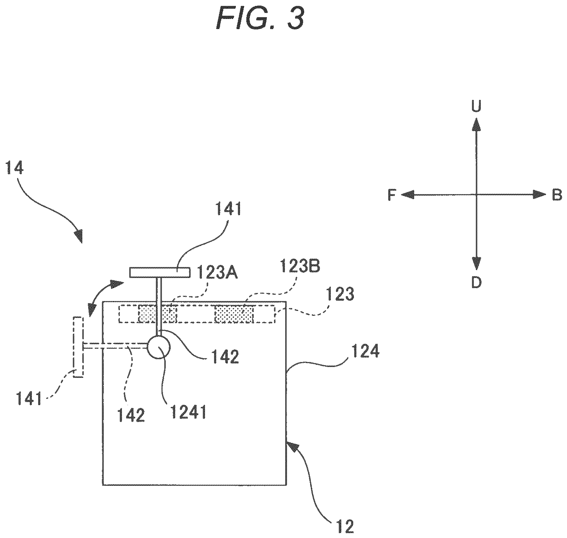

The shielding member 14 is configured to be movable between a position through which the light La emitted from the first region 123A of the liquid crystal device 123 passes and a position through which the light La does not pass through. Specifically, as illustrated in FIGS. 2 and 3, the shielding member 14 includes a cover part 141 and a support member 142. Note that in FIG. 3, only the liquid crystal device 123 arranged in the housing 124 of the image generation unit 12 is shown with a broken line, and the light source 121 and the optical component 122 are omitted.

The cover part 141 is configured to shield external light incident on the first region 123A of the liquid crystal device 123 from the outside of the vehicle 20. In the present example, the cover part 141 is a plate-shaped member. The cover part 141 is formed of, for example, a material with greater heat resistance than common materials, such as aluminum, iron, or ceramic.

The support member 142 is attached to the cover part 141. The support member 142 supports the cover part 141 so as to be movable between a position through which the light La emitted from the first region 123A of the liquid crystal device 123 passes (a position indicated by a solid line in FIGS. 2 and 3) and a position through which the light La does not pass (a position indicated by a dash-dot-dot line in FIGS. 2 and 3).

In the present example, the cover part 141 is arranged so that a main surface of the cover part 141 faces the first region 123A along an upper surface of the housing 124 at the position through which the light La emitted from the first region 123A passes (hereinafter, referred to as a first position). In addition, the cover part 141 is arranged so that the main surface of the cover part 141 faces along a side surface of the housing 124 at the position through which the light La does not pass (hereinafter, referred to as a second position). Additionally, the support member 142 is attached to a rotary member 1241 provided to the housing 124 of the image generation unit 12. The rotary member 1241 rotates around an axis line L when a built-in motor is driven. The support member 142 is rotated along with the rotation of the rotary member 1241.

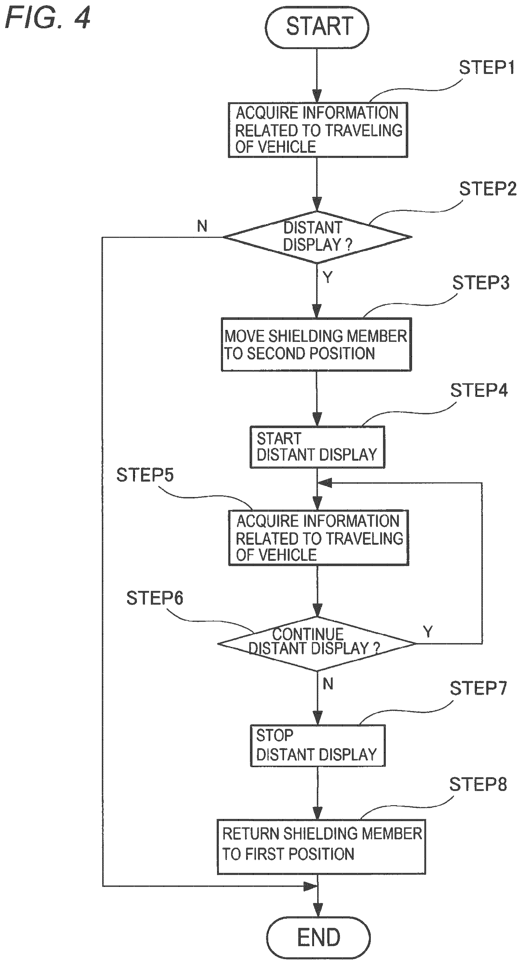

Next, control of the shielding member 14 by the controller 15 will be described with reference to FIGS. 4 to 6. FIG. 4 shows a flow of control of the shielding member 14 by the controller 15.

As illustrated in FIG. 4, when the controller 15 acquires information related to traveling of the vehicle from the vehicle controller 22 (STEP1), the controller determines whether to display a virtual image representing predetermined information at a distant location (STEP2).

If the controller 15 determines that a virtual image representing predetermined information is not displayed at a distant location (NO in STEP 2), the main processing ends. In this case, for example, the controller 15 may display a virtual image representing predetermined information at a nearby location. Specifically, the controller 15 outputs a control signal for generating a second image for forming a virtual image to be displayed at the nearby location to the image generation unit 12. The image generation unit 12 emits light constituting the second image from the second region 123B of the liquid crystal device 123 based on the control signal. The light emitted from the second region 123B is reflected by the concave mirror 13 and irradiated onto the windshield 21. Thereby, the virtual image object Ib is visibly formed at a nearby location from the vehicle 20.

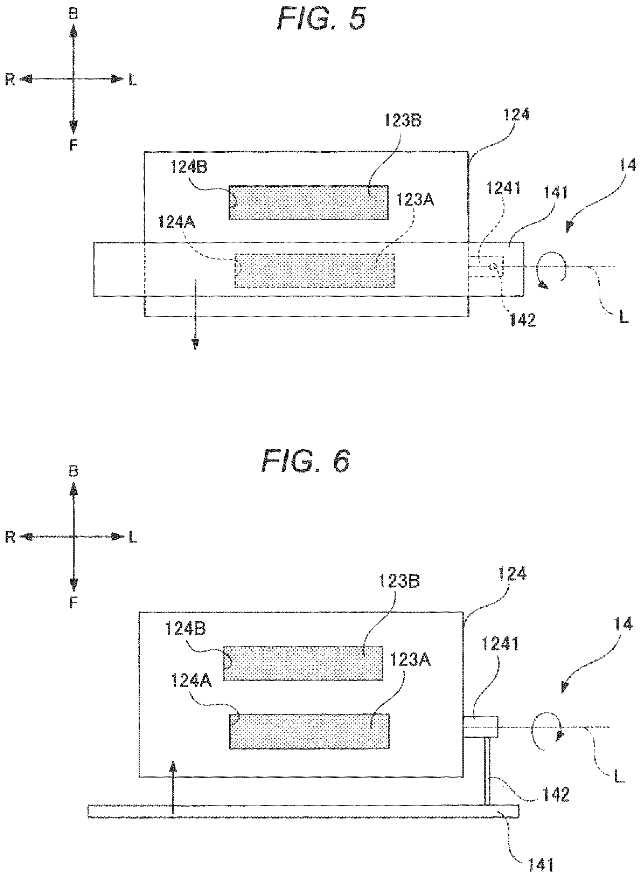

On the other hand, if the controller 15 determines that a virtual image representing predetermined information is displayed at a distant location (YES in STEP 2), the controller 15 moves the shielding member 14 from the first position through which the light La emitted from the first region 123A of the liquid crystal device 123 passes to the second position through which the light La does not pass (STEP3). Specifically, as illustrated in FIG. 5, in a state in which the cover part 141 is arranged at the first position, the control portion 15 outputs a control signal for driving the motor to the rotary member 1241. When the motor drives based on the control signal, the support member 142 rotates counterclockwise when viewed from a direction along the axis line L, together with the rotary member 1241. Thereby, as illustrated in FIG. 6, the cover part 141 moves from the first position to the second position.

Additionally, the controller 15 starts displaying a virtual image representing predetermined information at the distant location (STEP 4). Specifically, the controller 15 outputs a control signal for generating a first image for forming a virtual image to be displayed at the distant location to the image generation unit 12. The image generation unit 12 emits light constituting the first image from the first region 123A of the liquid crystal device 123 based on the control signal. The light emitted from the first region 123A is reflected by the concave mirror 13 and irradiated onto the windshield 21. Thereby, the virtual image object Ia is visibly formed at the distant location from the vehicle 20. Note that STEP3 and STEP4 may be performed simultaneously.

Subsequently, when the controller 15 acquires information related to traveling of the vehicle from the vehicle controller 22 (STEP 5), the controller determines whether to continue displaying the virtual image at the distant location (STEP 6). If the controller 15 determines that displaying the virtual image at the distant location is to be continued (YES in STEP 6), the controller returns to STEP 5 and repeats STEP 5 and STEP 6 until it is determined that displaying the virtual image at the distant location is not to be continued.

On the other hand, when the controller 15 determines that displaying the virtual image at the distant location is not to be continued (NO in STEP 6), the controller stops displaying the virtual image at the distant location (STEP 7). Specifically, the controller 15 outputs a control signal for stopping generation of the first image to the image generation unit 12. The image generation unit 12 stops the emission of the light from the first region 123A of the liquid crystal device 123 based on the control signal.

Additionally, the controller 15 moves the shielding member 14 from the second position through which the light La emitted from the first region 123A of the liquid crystal device 123 does not pass to the first position through which the light La passes (STEP8). Specifically, as illustrated in FIG. 6, in the state in which the cover part 141 is arranged at the second position, the controller 15 outputs a control signal for driving the motor to the rotary member 1241. When the motor drives based on the control signal, the support member 142 rotates clockwise when viewed from the direction along the axis line L, together with the rotary member 1241. Thereby, as illustrated in FIG. 5, the cover part 141 moves from the second position to the first position. Note that STEP7 and STEP8 may be performed simultaneously.

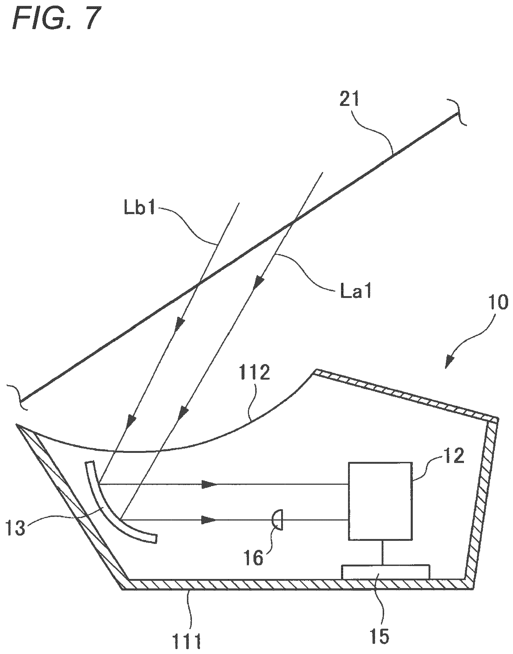

Note that in the HUD 10, as illustrated in FIG. 7, when external lights La1 and Lb1 such as sunlight incident from the outside of the vehicle 20 through the windshield 21 are incident on the inside of the housing 111 from the emission window 112, the external lights may be reflected by the concave mirror 13 and condensed on the image generation unit 12. When such condensed external lights are irradiated to the liquid crystal device 123 of the image generation unit 12, the far-infrared rays included in the external lights may cause a local temperature rise on an emission surface of the liquid crystal device 123, resulting in deterioration of the polarizing film.

In particular, a magnification of the first image for forming a virtual image to be projected on the windshield 21 and displayed at a distant location is greater than a magnification of the second image for forming a virtual image to be projected on the windshield 21 and displayed at a nearby location. That is, a region where the first image is projected onto the windshield 21 is larger than a region where the second image is projected onto the windshield 21. For this reason, the external light transmitting through the larger region of the windshield 21 is incident on the first region 123A of the liquid crystal device 123. That is, a condensed amount of arriving external light is larger in the first region 123A, which generates the first image, than in the second region 123B, which generates the second image. Therefore, the first region 123A is more affected by heat damage due to the external light.

According to the HUD 10 according to the embodiment of the present disclosure, the shielding member 14 can move between the position through which the light La constituting the first image emitted from the first region 123A of the liquid crystal device 123 passes and the position through which the light La does not pass. Specifically, the controller 15 controls the shielding member 14 so that the shielding member is arranged at the position through which the light La does not pass when the light La is emitted from the first region 123A and is arranged at the position through which the light La passes when the light La is not emitted from the first region 123A.

In this way, the shielding member 14 is arranged at the position through which the light La does not pass while the virtual image is displayed at the distant location, so the light La constituting the first image for forming the virtual image to be displayed at the distant location is not shielded by the shielding member 14. On the other hand, the shielding member 14 is arranged at the position through which the light La passes while the virtual image is not displayed at the distant location, so the shielding member 14 can prevent the external light from reaching the first region 123A. Thereby, the occurrence of heat damage due to the external light in the first region 123A can be suppressed. Therefore, it is possible to suppress the occurrence of heat damage due to the external light without deteriorating a quality of the virtual image.

Additionally, in the present embodiment, the shielding member 14 is provided between the image generation unit 12 and the concave mirror 13. In the present example, the shielding member 14 is attached to the image generation unit 12. Since the external light incident on the inside of the HUD 10 is condensed toward the image generation unit 12, the shielding member 14 (i.e., the cover part 141) can be formed smaller the closer it is to the image generation unit 12. Therefore, by attaching the shielding member 14 to the image generation unit 12, the enlargement of the shielding member 14 can be suppressed.

Additionally, in the present embodiment, the shielding member 14 is controlled to move from the position through which the light La passes to the position through which the light La does not pass when the light La constituting the first image is emitted, and to return to the position through which the La passes when the emission of the light La stops. This can prevent the external light from being incident on the first region 123A of the liquid crystal device 123 without controlling the operation of the shielding member 14. Note that the shielding member 14 may also be controlled to move from the position through which the light La does not pass to the position through which the light La passes when the light La constituting the first image is not emitted, and to return to the position through which the La does not pass when the light La is emitted.

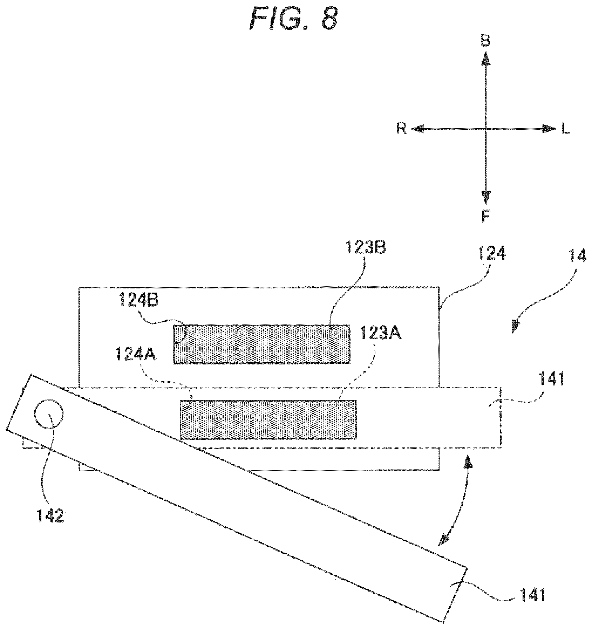

Note that in the present embodiment, the configuration of the shielding member 14 is not limited to the configuration in FIGS. 2 and 3. For example, as shown in FIG. 8, the cover part 141 may be configured to be movable parallel to the upper surface of the image generation unit 12. Specifically, the support member 142 is configured to be rotatable about an axis line along a vertical direction by a drive mechanism (not shown). The cover part 141 may move between the first position and the second position while rotating about the support member 142.

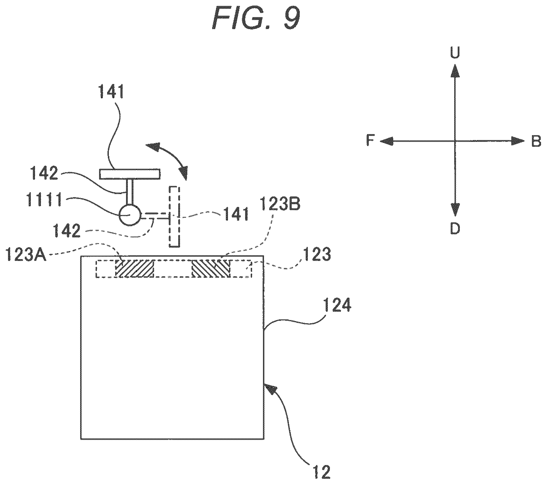

Alternatively, as illustrated in FIG. 9, the cover part 141 may be configured to be movable between a position through which the light La constituting the first image passes and a position between the position through which the light La passes and a position through which the light Lb constituting the second image passes. In this case, the support member 142 may be movably attached to the housing 111 of the HUD main body part 11 instead of the image generation unit 12. For example, the support member 142 may be attached to a rotary member 1111 in which the motor provided in the housing 111 is built. According to this configuration, when the cover part 141 is arranged between an optical path of the light La and an optical path of the light Lb, occurrence of stray light that the light La enters the optical path of the light Lb, or the light Lb enters the optical path of the light La can be suppressed.

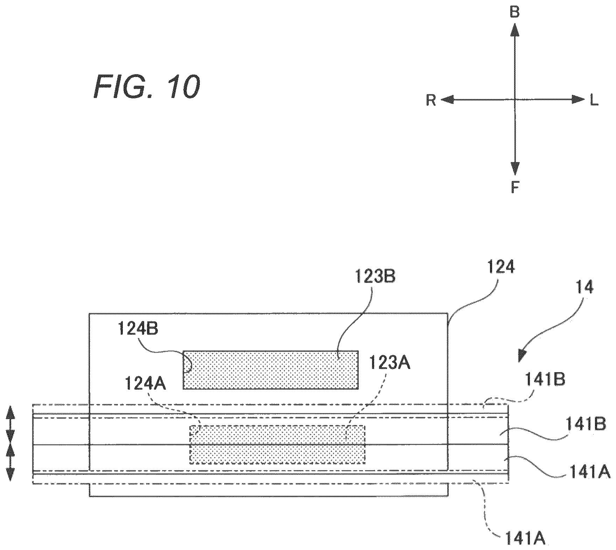

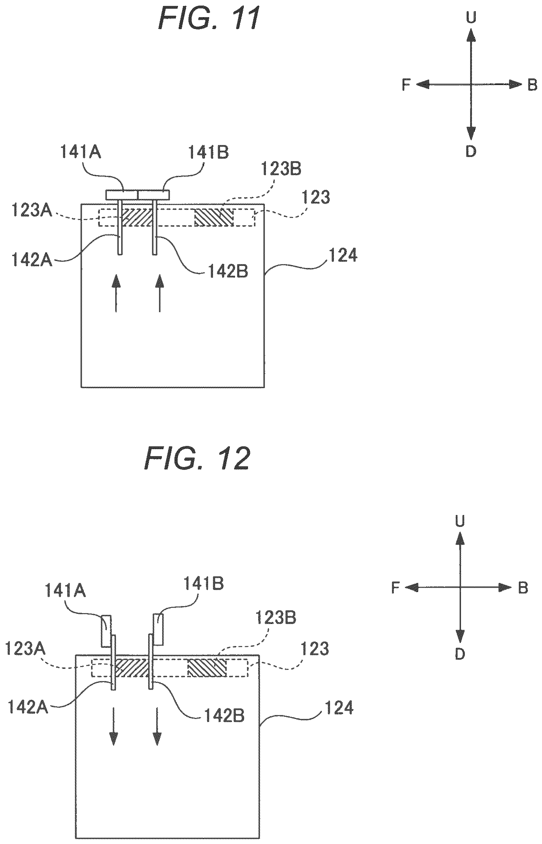

In addition, for example, as shown in FIGS. 10 and 11, the shielding member 14 may have two cover parts 141A and 141B and two support members 142A and 142B. The support member 142A is attached to the cover part 141A. The support member 142B is attached to the cover part 141B. The support member 142A and the support member 142B are configured to be movable up and down by a drive mechanism (not shown). The cover part 141A and the cover part 141B are configured to be movable between a first position and a second position along with the up and down movement of the support members 142A and 142B.

Specifically, in a state in which the cover part 141A and the cover part 141B are arranged at a first position where they cover the first region 123A of the liquid crystal device 123 shown in FIG. 11, when the support member 142A and the support member 142B are moved upward, the cover part 141A and the cover part 141B are pushed upward, and their directions change by 90 degrees, as shown in FIG. 12. Thereby, the cover part 141A and the cover part 141B are moved to a second position where they do not cover the first region 123A. Then, in the state in which the cover part 141A and the cover part 141B are arranged at the second position shown in FIG. 12, when the support member 142A is moved downward, the cover part 141A and the cover part 141B are pulled downward, and their directions change by 90 degrees, as shown in FIG. 11. Thereby, the cover part 141A and the cover part 141B are moved to the first position where they cover the first region 123A.

Even with this configuration, it is possible to suppress the occurrence of heat damage due to the external light without deteriorating the quality of the virtual image. Additionally, since the cover part 141B is moved, as the second position through which the light La constituting the first image does not pass, between the position through which the light La passes and the position through which the light Lb constituting the second image passes, the occurrence of stray light that the light La enters the optical path of the light Lb, or the light Lb enters the optical path of the light La can be suppressed.

Additionally, in the present embodiment, the controller 15 controls the shielding member 14 based on the determination as to whether to display a virtual image at the distant location, as shown in FIG. 4. However, the controller 15 may control the shielding member 14 based on a temperature of the image generation unit 12.

For example, as shown in FIG. 1, the HUD 10 includes a temperature senser 17. The temperature sensor 17 measures a temperature of the first region 123A of the liquid crystal device 123 of the image generation unit 12. The temperature sensor 17 is, for example, a thermo camera. The controller 15 receives information about the temperature of the first region 123A from the temperature sensor 17 and controls the shielding member 14 based on the information.

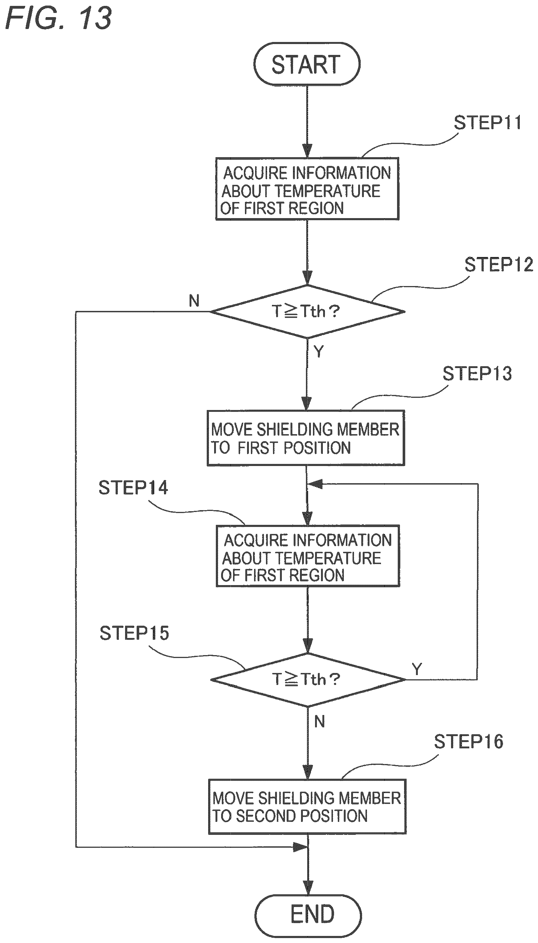

FIG. 13 shows a flow of control of the shielding member 14 based on the temperature of the first region 123A.

As illustrated in FIG. 13, when the controller 15 acquires a temperature T of the first region 123A of the liquid crystal device 123 from the temperature sensor 17 (STEP 11), the controller determines whether the temperature T of the first region 123A is equal to or greater than a threshold value Tth (STEP12). If the controller 15 determines that the temperature T of the first region 123A is less than the threshold value Tth (NO in STEP 12), the main processing ends. The threshold value Tth can be appropriately set based on characteristics or the like of the liquid crystal device 123.

If the controller 15 determines that the temperature T of the first region 123A is equal to or greater than the threshold value Tth (YES in STEP 12), the controller 15 moves the shielding member 14 from the second position through which the light La emitted from the first region 123A of the liquid crystal device 123 does not pass to the first position through which the light La passes (STEP13).

Subsequently, when the controller 15 acquires a temperature T of the first region 123A of the liquid crystal device 123 from the temperature sensor 17 (STEP14), the controller determines whether the temperature T of the first region 123A is equal to or greater than the threshold value Tth (STEP15). If the controller 15 determines that the temperature T of the first region 123A is equal to or greater than the threshold value Tth (YES in STEP 15), the controller 15 returns to STEP 14, and repeats STEP 14 and STEP 15 until it is determined that the temperature T of the first region 123A is less than the threshold value Tth.

If the controller 15 determines that the temperature T of the first region 123A is less than the threshold value Tth (NO in STEP 15), the controller 15 moves the shielding member 14 from the second position through which the light La emitted from the second region 123B of the liquid crystal device 123 of the image generation unit 12 does not pass to the first position through which the light La passes (STEP16).

In this way, the controller 15 controls the shielding member 14 to be arranged at the position through which the light La passes when the temperature of the image generation unit 12 reaches a predetermined value or greater. Thereby, it is possible to prevent the occurrence of heat damage due to the external light while suppressing the deterioration in quality of the virtual image.

Note that when moving the shielding member 14 from the first position to the second position in STEP 13, if displaying the virtual image at the distant location is being performed, the controller 15 may stop displaying the virtual image at the distant location. Then, the controller 15 may resume displaying the virtual image at the distant location when moving the shielding member 14 from the second position to the first position in STEP 16.

Additionally, in the present embodiment, the temperature sensor 17 is arranged in the HUD main body part 11 away from the image generation unit 12. However, the temperature sensor 17 may be formed integrally with the image generation unit 12. For example, the temperature sensor 17 may be provided in the liquid crystal device 123.

Additionally, in the present embodiment, the controller 15 determines whether the temperature of the first region 123A is equal to or greater than the threshold value. However, the temperature sensor 17 may determine whether the temperature of the first region 123A is equal to or greater than the threshold value. In this case, the temperature sensor 17 may be configured to, when the temperature of the first region 123A becomes equal to or greater than the threshold value, output a signal indicating the same to the controller 15. In this case, the controller 15 may control the shielding member 14 based on whether a signal has been acquired from the temperature sensor 17.

Additionally, in the present embodiment, the shielding member 14 is controlled based on the temperature of the first region 123A of the liquid crystal device 123. However, the controller 15 may control the shielding member 14 based on both the display of the virtual image at the distant location and the temperature of the first region 123A.

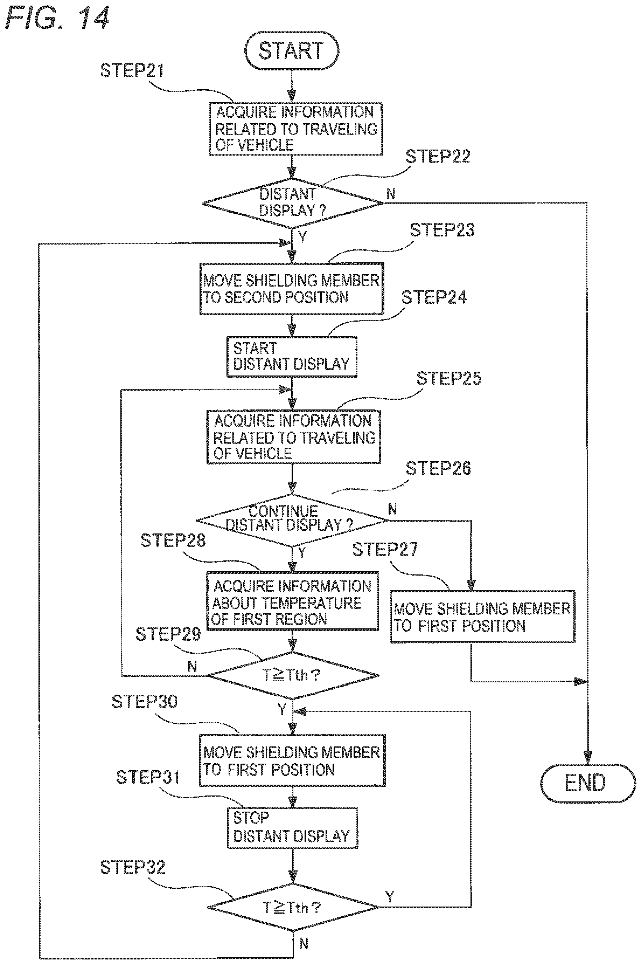

FIG. 14 shows a flow of control of the shielding member 14 based on the display of the virtual image at the distant location and the temperature of the first region 123A.

As illustrated in FIG. 14, when the controller 15 acquires information related to traveling of the vehicle from the vehicle controller 22 (STEP21), the controller determines whether to display a virtual image representing predetermined information at a distant location (STEP22).

If the controller 15 determines that a virtual image representing predetermined information is not displayed at the distant location (NO in STEP 22), the main processing ends. In this case, the controller 15 may display a virtual image representing predetermined information at a nearby location.

If the controller 15 determines that a virtual image representing predetermined information is displayed at the distant location (YES in STEP 22), the controller moves the shielding member 14 from the first position through which the light La emitted from the first region 123A of the liquid crystal device 123 passes to the second position through which the light La does not pass (STEP23). Additionally, the controller 15 displays a virtual image representing predetermined information at the distant location (STEP 24). Note that STEP23 and STEP24 may be performed simultaneously.

Subsequently, when the controller 15 acquires information related to traveling of the vehicle from the vehicle controller 22 (STEP25), the controller determines whether to continue displaying the virtual image at the distant location (STEP26). If the controller 15 determines that the display of the virtual image at the distant location is not to be continued (NO in STEP 26), the controller 15 moves the shielding member 14 from the second position through which the light Lb emitted from the first region 123A of the liquid crystal device 123 does not pass to the first position through which the light La passes (STEP 27). Then, the processing returns to STEP21.

If the controller 15 determines that displaying the virtual image at the distant location is to be continued (YES in STEP 26), the controller acquires the temperature T of the first region 123A of the liquid crystal device 123 from the temperature sensor 17 (STEP 28). For example, when the controller 15 determines that displaying the virtual image at the distant location is to be continued, the controller starts measuring the temperature of the first region 123A of the liquid crystal device 123. Specifically, the controller 15 outputs a control signal for starting measurement of the temperature of the first region 123A to the temperature sensor 17. Then, the controller 15 acquires the temperature T of the first region 123A of the liquid crystal device 123 from the temperature sensor 17.

Subsequently, the controller 15 determines whether the temperature T of the first region 123A is equal to or greater than the threshold value Tth (STEP29). Then, when the controller 15 determines that the temperature T of the first region 123A is less than the threshold value Tth (NO in STEP 29), the controller returns to STEP 25.

On the other hand, if the controller 15 determines that the temperature T of the first region 123A is equal to or greater than the threshold value Tth (YES in STEP 29), the controller moves the shielding member 14 from the second position through which the light La emitted from the first region 123A of the liquid crystal device 123 does not pass to the first position through which the light La passes (STEP30). Then, the controller 15 stops displaying the virtual image at the distant location (STEP31).

Subsequently, the controller 15 acquires the temperature T of the first region 123A of the liquid crystal device 123 from the temperature sensor 17, and determines whether the temperature T of the first region 123A is equal to or greater than the threshold value Tth (STEP32).

If the controller 15 determines that the temperature T of the first region 123A is equal to or greater than the threshold value Tth (YES in STEP32), the controller returns to STEP30 and repeats STEP31 and STEP32 until it is determined that the temperature T of the first region 123A is less than the threshold value Tth.

On the other hand, if the controller 15 determines that the temperature T of the first region 123A is less than the threshold value Tth (NO in STEP 32), the controller returns to STEP 23 to move the shielding member 14 from the first position to the second position (STEP 23) and resumes displaying at the distant location (STEP 24).

According to this configuration, when the temperature of the first region 123A becomes a predetermined value or greater even while the virtual image is displayed at the distant location, the shielding member 14 is arranged at the position through which the light La constituting the first image for forming the virtual image to be displayed at the distant location passes. Thereby, it is possible to further suppress the occurrence of heat damage due to the external light while suppressing the deterioration in quality of the virtual image.

The controller 15 having the above functions can be implemented by a dedicated integrated circuit that can execute the above computer program, such as a microcontroller, an ASIC, or an FPGA. Alternatively, the controller 15 having the above functions can be implemented by a general-purpose microprocessor that operates in cooperation with a general-purpose memory. As the general-purpose microprocessor, a CPU, an MPU, and a GPU may be exemplified. As the general-purpose memory, a ROM and a RAM may be exemplified. In this case, a computer program that executes the above-described processing can be stored in the ROM. The general-purpose microprocessor specifies at least a part of the computer program stored on the ROM, develops the same on the RAM, and executes the above-described processing in cooperation with the RAM.

Although the embodiment of the present invention has been described, it should be noted that the technical scope of the present invention should not be construed as being limited by the description of the present embodiment. It is understood by one skilled in the art that the present embodiment is just an example and the embodiment can be variously changed within the scope of the invention described in the claims. The technical scope of the present invention should be determined based on the scope of the invention described in the claims and the equivalent scope thereof.

In the above embodiment, the light emitted from the image generation unit 12 may be configured to be incident on the concave mirror 13 through an optical component such as a flat mirror, a concave mirror, or a convex mirror.

In the above embodiment, the light constituting the first image and the light constituting the second image are emitted from one image generation unit 12. However, the HUD 10 may be provided with a plurality of image generation units 12, and the light constituting the first image and the light constituting the second image may be configured to be emitted from different image generation units 12, respectively.

In the above embodiment, the light constituting the first image and the light constituting the second image emitted from the image generation unit 12 are configured to be incident on the single concave mirror 13. However, the light constituting the first image and the light constituting the second image may be reflected by different concave mirrors.

In the above embodiment, the shielding member 14 is provided between the image generation unit 12 and the concave mirror 13. However, the shielding member 14 may be provided between the concave mirror 13 and the windshield 21.

In the above embodiment, the shielding member 14 is taken as an example of the optical member. However, regarding the optical member, another optical member may be used in place of the shielding member 14 as long as the optical member is configured to reduce the amount of external light incident on the image generation unit 12. For example, the optical member may have an optical filter. The optical filter may be configured to reduce, for example, the transmittance of external light (for example, the transmittance of visible light) passing through the optical filter to 20% or less.

In the above embodiment, the HUD 10 is configured to display virtual images at two positions at different distances from the viewpoint E of the occupant. However, the HUD 10 may be configured to display virtual images at three or more different positions at different distances from the viewpoint E of the occupant.

In the above embodiment, the light emitted from the image generation unit 12 is configured to be reflected by the concave mirror 13 and irradiated onto the windshield 21. However, for example, the light reflected by the concave mirror 13 may be irradiated onto a combiner (not shown) provided inside the windshield 21. The combiner is composed of, for example, a transparent plastic disc. Part of the light irradiated to the combiner from the image generation unit 12 of the HUD main body part 11 is reflected toward the viewpoint E of the occupant, similar to the case where the light is irradiated to the windshield 21.

In the above embodiment, the controller 15 determines whether to display the virtual image at the distant location based on the information related to traveling of the vehicle from the vehicle controller 22. However, the vehicle controller 22 may determine whether to display the virtual image at the distant location. In this case, when the controller 15 receives an instruction signal for display at the distant location from the vehicle controller 22, the controller determines to perform the display at the distant location.

In the above embodiment, the vehicle controller 22 and the controller 15 are provided as separate configurations. However, the vehicle controller 22 and the controller 15 may be integrated.

In the above embodiment, the HUD 10 is taken as an example of the image irradiation device, but is not limited thereto.

The present application is based on Japanese Patent Application No. 2021-210469 filed on December 24, 2021, the contents of which are incorporated herein by reference.

## Claims

1. An image irradiation device for a vehicle configured to be able to display a plurality of virtual images at different distances, the image irradiation device comprising:
an image generation unit configured to generate a first image for forming a first virtual image and a second image for forming a second virtual image to be displayed nearer than the first virtual image; and
an optical member configured to be able to reduce an amount of external light incident on the image generation unit and to be movable between a position through which first light constituting the first image emitted from the image generation unit passes and a position through which the first light does not pass.

2. The image irradiation device according to claim 1, wherein the position through which the first light does not pass is between a position through which the first light constituting the first image emitted from the image generation unit passes and a position through which second light constituting the second image emitted from the image generation unit passes.

3. The image irradiation device according to claim 1 or 2, comprising:
a reflection unit configured to reflect the first light constituting the first image and the second light constituting the second image emitted from the image generation unit,
wherein the optical member is provided between the image generation unit and the reflection unit.

4. The image irradiation device according to claim 3, wherein the optical member is attached to the image generation unit.

5. The image irradiation device according to any one of claims 1 to 4, comprising:
a controller configured to control the optical member,
wherein the controller is configured to control the optical member so that the optical member is arranged at a position through which the first light does not pass when the first light is emitted from the image generation unit, and is arranged at a position through which the first light passes when the first light is not emitted from the image generation unit.

6. The image irradiation device according to any one of claims 1 to 4, comprising:
a controller configured to control the optical member,
wherein the controller is configured to control the optical member to be arranged at a position through which the first light passes when a temperature of the image generation unit becomes a predetermined value or greater.

7. The image irradiation device according to any one of claims 1 to 4, comprising:
a controller configured to control the optical member,
wherein the controller is configured to control the optical member so that the optical member is arranged at a position through which the first light does not pass when the first light is emitted from the image generation unit, and is arranged at a position through which the first light passes when the first light is not emitted from the image generation unit, and
wherein the controller is configured to control the optical member to be arranged at a position through which the first light passes when a temperature of the image generation unit becomes a predetermined value or greater while the first light is emitted.
